Europäisches Patentamt

European Patent Office

Office européen des brevets

(19)

(11) **EP 0 487 318 B1**

(12) **EUROPEAN PATENT SPECIFICATION**

(45) Date of publication and mention
of the grant of the patent:
**05.02.1997 Bulletin 1997/06**

(51) Int Cl.6: **G06K 7/10**

(21) Application number: **91310674.6**

(22) Date of filing: **20.11.1991**

(54) **Laser beam generation control system for optical bar code scanner**

Steuerungssystem zur Laserstrahlerzeugung an einem optischen Leser für Strichkodierungen

Système de commande de génération d'un faisceau laser pour un lecteur optique de code barre

(84) Designated Contracting States:
**DE FR GB**

(30) Priority: **20.11.1990 JP 314606/90**

(43) Date of publication of application:
**27.05.1992 Bulletin 1992/22**

(73) Proprietor: **FUJITSU LIMITED**
**Kawasaki-shi, Kanagawa 211 (JP)**

(72) Inventors:
• **Katoh, Hiroaki, c/o Fujitsu Limited**
**Kawasaki-shi, Kanagawa 211 (JP)**
• **Sebata, Ichiro**
**San Diego, California 92130 (US)**
• **Ishii, Mitsuharu, c/o Fujitsu Limited**
**Kawasaki-shi, Kanagawa 211 (JP)**

• **Sato, Shinichi, c/o Fujitsu Limited**
**Kawasaki-shi, Kanagawa 211 (JP)**

(74) Representative:
**Fane, Christopher Robin King et al**
**HASELTINE LAKE & CO.**
**Hazlitt House**
**28 Southampton Buildings**
**Chancery Lane**
**London, WC2A 1AT (GB)**

(56) References cited:
EP-A- 0 364 676          US-A- 3 925 639
US-A- 4 160 156          US-A- 4 639 606

• **IBM TECHNICAL DISCLOSURE BULLETIN vol.**
**26, no. 10B, March 1984, page 5586 E.C.**
**BROOCKMAN ET AL. 'SHUTTERLESS LASER**
**SCANNER CAPABLE OF CLASS 1 OPERATION'**

EP 0 487 318 B1

## Description

The invention relates to a controller for an optical mark reader, such as a bar code reader, and to an optical mark reader.

In recent years, the use of bar coding has become widespread, for example in the retail industry. The need for bar code scanners which are ever more compact, less expensive and have lower power consumption grows continuously. Consequently, diode lasers are often preferred as laser sources in place of helium-neon lasers, as they are smaller than helium-neon lasers and use less electrical power. However, the lifetime of diode lasers is generally shorter than that of helium-neon lasers and depends on the total amount of time which the diode laser lases, this time sometimes being referred to as the generation time or burning time of the laser. It is thus necessary to replace the diode laser of a bar code scanner or the like at regular intervals. Therefore, it would be desirable to prolong the life of diode lasers used in optical mark scanners.

An optical mark reader device such as a bar-code scanner is an input device that illuminates a bar code symbol present on, for example, tags or products and then detects the light reflected from the bar code symbol. The scanner can be passed across the bar code or, alternatively, the object containing the bar code can be passed across the scanner. Fixed-beam scanners are for example used to monitor the movement of materials.

Bar code scanners are generally designed such that the diode laser is only turned on when a bar code is to be read, thus reducing the generation period of the laser to prolong its life. That is, after a bar code has been read, the laser is turned off and is only turned on again when an article is detected in a predefined reading space by an optical item sensor, or when a reading operation is initiated directly.

Use of an item sensor is associated with problems, since operation is influenced by the sensor performance. Moreover, provision of such a sensor makes the apparatus larger and adds to its manufacturing cost.

Use of a trigger switch to turn the diode laser on and off is associated with problems, since it is necessary to activate the switch whenever a bar code is to be read, which can lead to operational errors. For example, the bar code may have to be scanned more frequently than necessary, thereby imposing an excessive workload on the operator.

A bar code scanner is known from IBM Technical Disclosure Bulletin Vol. 26, No. 10B, page 5586 (March 1984) which provides two operational modes for the laser, namely a read mode and a stand-by mode. In the read mode the laser remains on continuously and in the stand-by mode the laser is energised intermittently at a low duty factor of, for example, 10%. If a bar code is detected while the laser is in stand-by mode, the laser is switched to the read mode. If no bar code is scanned for a given period of time of the order of a few minutes the laser is automatically switched back to the stand-by mode.

A bar code scanner with a controller according to the preamble of Claim 1 using a diode laser as the laser source is known from US 4,639,606 which provides three operational modes for the laser: namely an intermittent stand-by mode with a duty factor of, for example, 1%; a search mode of higher power and a read mode of yet higher power. The stand-by mode is continued with until a reflected signal is obtained, whereupon the laser is switched to the search mode for a given period of time or until the first black bar of the bar code is detected at which time the laser is switched to the read mode as long as successive bars are detected within a given period of time. The laser is then switched back to the stand-by mode.

In accordance with a first aspect of the invention, there is provided a controller for an optical mark reader of the type comprising a laser for producing a laser beam, means for scanning the laser beam over a mark and a photoconvertor positioned to receive light emitted from the laser after its reflection from such a mark, the controller having an output for delivery of a laser control signal for selectively turning such a laser on and off between lasing and non-lasing respectively and an input for receiving a signal providing a read command indicating that a mark is to be read, the controller being operable to output the laser control signal in a plurality of different forms including a read mode to read a mark and a primary stand-by mode to turn such a laser on and off in an intermittent manner with a given duty cycle, wherein the controller is operable to switch the laser control signal to the read mode whenever a read command is present at said input and from the read mode to the primary stand-by mode after no read command has been applied to said input for a preselected period of time, wherein the laser control signal has a secondary stand-by mode to turn the laser on and off in an intermittent manner with a duty cycle having a smaller duty factor than that of the primary stand-by mode and in that the controller is operable to switch the laser control signal from the primary stand-by mode to the secondary stand-by mode after no read command has been applied to said input for a further preselected period of time.

It will be seen that an embodiment can be so designed as to shorten the amount of time over which the laser needs to lase, without needing to utilize a trigger switch or an item sensor.

In accordance with a second aspect of the invention, there is provided an optical mark reader comprising a laser for producing a laser beam, means for scanning the laser beam over a mark, a photoconvertor positioned to receive light emitted from the laser after its reflection from such a mark and a controller according to the first aspect.

For a better understanding of the invention, and to show how the same may be carried into effect, reference will now be made, by way of example only, to the accompanying drawings. It is noted that the invention is described in the following in terms of a diode laser and a bar code reader, however the invention is neither specific to diode lasers nor to bar code readers, but also applies to other kinds of lasers and mark readers. In the accompanying drawings:

Figs. 1 and 2 are block diagrams of bar code scanners illustrative of first and second aspects of the invention;
Fig. 3 shows schematic illustrations of a bar code scanning unit and its operation;
Fig. 4 is a block diagram of a first embodiment;
Fig. 5 shows timing diagrams of a pulsed signal (PNF) used to drive the laser;
Fig. 6 is a block diagram of a second embodiment;

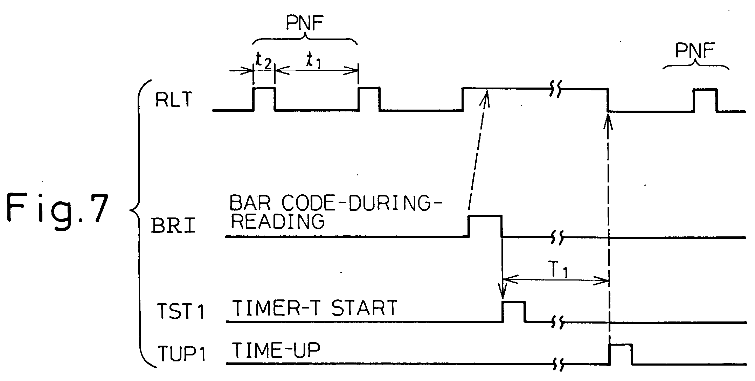

Fig. 7 is a timing diagram showing various signals of the second embodiment;
Fig. 8 shows the detection of the presence of a bar code by reading a marginal portion thereof;
Fig. 9 is a block diagram of a third embodiment;

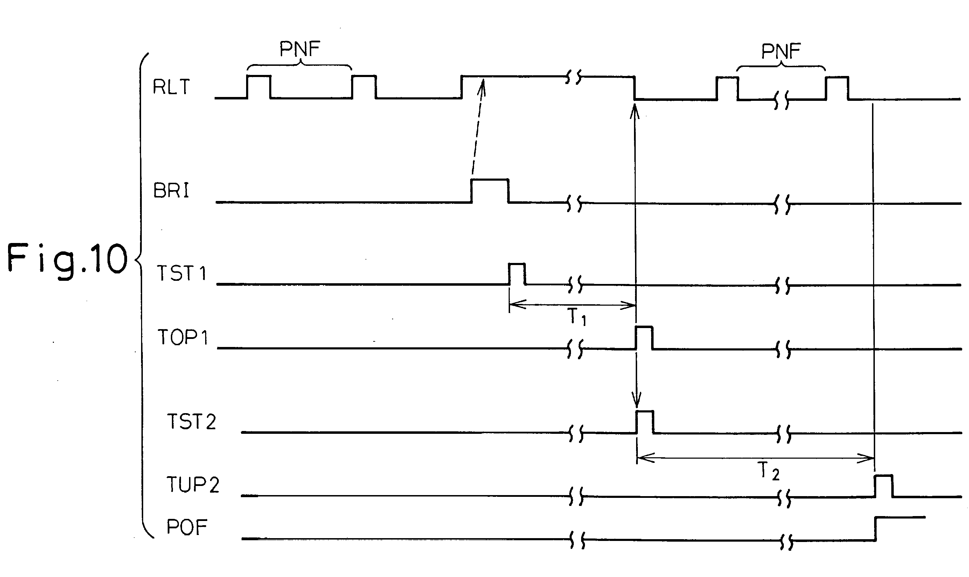

Fig. 10 is a timing diagram showing various signals of the third embodiment;
Fig. 11 is a timing diagram showing various signals during the start-up phase of the third embodiment;
Fig. 12 is a block circuit diagram showing an automatic power control circuit suitable for any of the embodiments;
Fig. 13 is a schematic view showing a laser turn-ON inhibition circuit suitable for any of the embodiments; and
Fig. 14 is a timing chart illustrative of an exemplary implementation of the invention, showing how the diode laser can be switched through various operating modes with different duty factors in response to an initial external signal to switch the system on (POW-ON) and subsequent detection of a bar code.

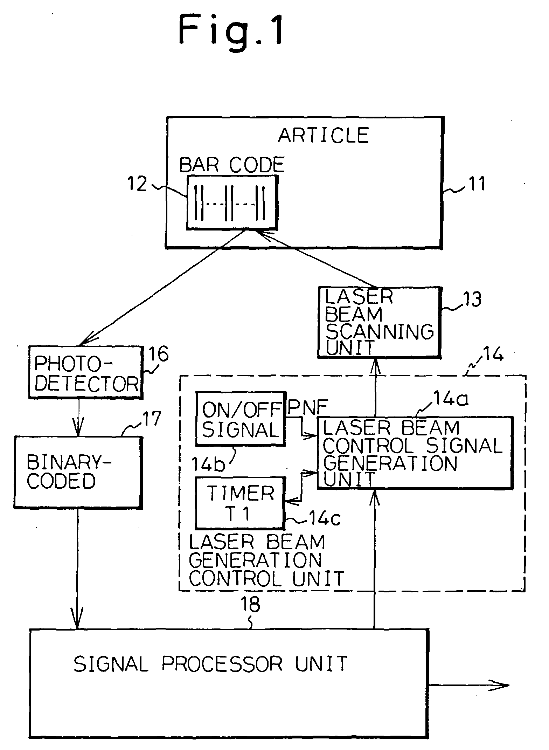

In Figure 1, reference numeral 11 denotes an article, 12 a bar code affixed to or printed on an article, 13 a laser scanner for scanning a bar code by a laser device, 14 a laser beam generation control unit for controlling a generation of laser beams, 16 a photodetector for carrying out a photoelectric conversion of light reflected from a bar code, 17 a binary-coded circuit unit for binary-coding the output of a photodetector, and 18 a signal processor unit for demodulating bar code data based on the output of the binary-coded circuit unit 17 and for controlling the whole bar code reader. The laser beam generation control unit 14 includes a laser control signal generator 14a, an ON/OFF signal generator unit for generating a pulsed signal PNF having a predetermined duty cycle 14b, and a timer 14c.

The laser beam generation control unit 14 controls a laser generation element in the laser scanner 13 by turning it on and off according to a predetermined duty cycle to generate an intermittent laser beam. For example, if the duty cycle is 50%, beam generation takes place for half the total time period thus doubling the lifetime of the laser.

When reflected light from the bar code 12 is detected by the photodetector 16 during intermittent beam generation, the resultant signal is passed via the binary-coded circuit unit 17 to the signal processor unit 18 and the laser beam generation element is turned on to generate a continuous laser beam. On the other hand, when reflected light from the bar code 12 is not detected for more than a predetermined period of time during continuous beam generation, the laser beam generation is switched from continuous to intermittent generation. By doing so, the period of time over which laser beam generation takes place is reduced whilst still providing continuous laser beam generation when required to read a bar code. This is advantageous when articles arrive continuously.

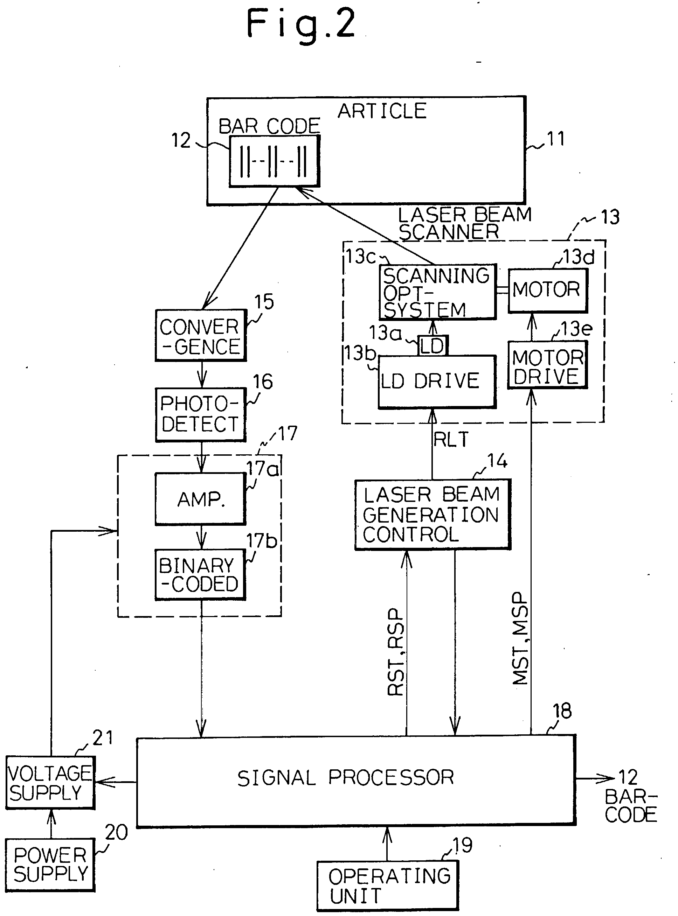

Further, when reflected light is not detected for more than a predetermined period of time during intermittent generation of the laser beam, generation of the laser beam is stopped. Thereby, if a power source is not turned off at the end of a work period, or if the work is finished, or if the device has not been used recently due to a scarcity of customers, the laser automatically stops generating a beam to prolong the life thereof. During cessation of laser beam generation, the operation of a motor or a mark reading portion can be stopped i.e. the power source is turned off to reduce power consumption. It is noted that the mark reading portion refers to the whole of Fig. 2, which includes a laser beam generation control unit, an amplifier circuit, a binary-coded circuit, a signal processor unit and so forth.

In Fig. 2, like reference numerals are used to denote parts common to Figure 1. The apparatus of Figure 2 further comprises a convergence unit 15 for collecting light reflected from a bar code 12, the photodetector thus receiving light via the convergance unit 15. As well as demodulating the binary-coded output, the signal processor unit 18 controls the whole bar code reader. The apparatus of Figure 2 further comprises an operating unit 19, a power source 20 and a voltage supply circuit 21 for supplying a voltage E (equal to 12 Volts) to a binary-coded circuit unit.

The laser beam scanner unit 13 includes a laser diode 13a for generating a laser beam, a laser diode drive unit 13b for turning the laser diode on and off via a laser control signal RLT, a scanning optical system 13c for scanning the laser beam on a bar code surface by a rotation thereof, a motor 13d for rotating a scanning optical system and a motor drive circuit 13e.

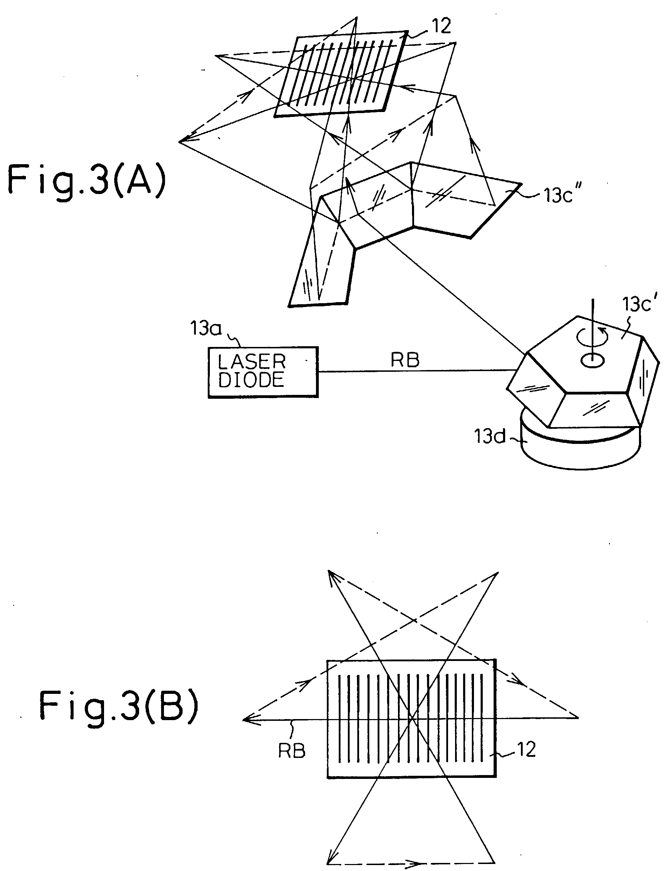

Figures 3(A) and 3(B) illustrate the bar code scanning unit. The laser beam scanning optical system 13c includes a polygonal mirror 13c' and a facetted mirror 13c''. A laser beam RB is reflected from the polygonal mirror 13c', which is rotated by the motor 13d, and then further reflected from the facetted mirror 13c'' to scan a bar code surface by the scanning pattern shown in Fig. 3(B).

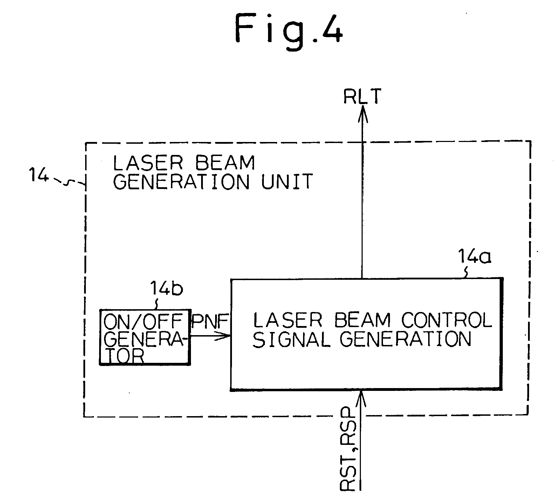

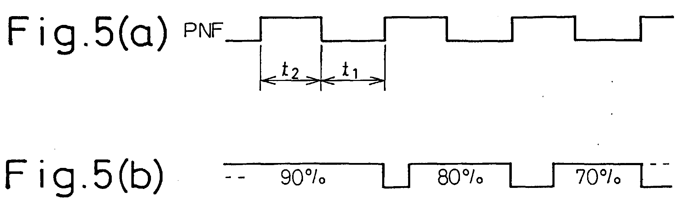

Fig. 4 shows a view of a first embodiment of the laser beam generation control unit 14. Fig. 5 is a timing diagram showing the waveform of a pulsed signal PNF.

As shown in Fig. 4, the laser beam generation control unit 14 includes a laser beam control signal generation unit 14a and an ON/OFF signal generator unit 14b for generating a pulsed signal PNF having a predetermined duty cycle. The pulsed signal PNF has an OFF-time $t_1$ and an ON-time $t_2$, as shown in Fig. 5(A), where the ON-time $t_2$ is longer than the time taken to complete one scanning pattern, i.e. more than one rotational period of the polygonal mirror 13c. The duty factor may be, for example, 50% and the period of the pulsed signal PNF set to be considerably shorter than the time that an article spends in the read space, preferably being equal to a fraction of the period.

The operation of the laser beam generation control unit 14 is now described.

When a read activation switch (not shown in the figure) on the operating unit 19 is activated, the signal processor unit 18 (1) generates a motor drive signal MST to rotate a motor 13d and (2) at the same time commands a voltage supply circuit 21 to apply a voltage E to an amplifier 17a and to a binary-coded circuit 17b in a binary-coded circuit unit 17 and (3) sends a read start instruction RST to the laser beam generation control unit 14.

When the RST signal is input, the laser beam control signal generation unit 14a receives a pulsed signal PNF produced from the ON/OFF signal generation unit 14b and sends a laser control signal RLT to the laser diode drive unit 13b (Refer to Fig. 2).

Thereby, the laser diode drive unit 13b turns the laser diode 13a on and off and scans the bar code 12 of incoming articles.

Reflected light from the bar code 12 converges on the convergence unit 15 and is then converted by the photodetector 16 into an electrical signal which is then binary-coded by the binary-coded circuit unit 17 and input into the signal processor unit 18.

The signal processor unit 18 demodulates the bar code based on a binary-coded output and outputs bar code data. Thereafter, whenever an article arrives in the read space, the above-described read operation is carried out. When read termination is instructed by a switch on the operating unit 19, a read termination signal RSP and a motor stopping signal MSP are output from the signal processor unit 18, the laser beam generation control unit 14 sets the RLT signal to a LOW level to stop laser beam generation and rotation of the motor.

The operational case described above is such that the duty factor of the PNF signal is constant, whereas, when reflected light is not detected from the bar code for more than a predetermined time, the apparatus may be operated such that during intermittent operation the duty factor is reduced gradually. For example, in Fig. 5(B) the duty factor is initially 100% (i.e. continuous generation) and is thereafter progressively reduced in 10% increments from 90% to 80% to 70% to 60% to 50% to 40% to 30% to 20% to 10%, this stepwise reduction being interrupted if reflected light is detected from a bar code, in which case the duty factor is returned to 100%.

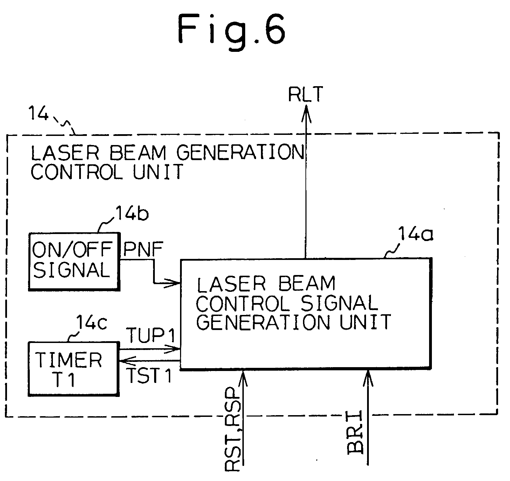

In the second embodiment, as shown in Figure 6, the laser beam generation control unit 14 includes a laser beam control signal generation unit 14a for outputting a laser control signal RLT, an ON/OFF signal generation unit 14b for generating a pulsed signal PNF carrying out intermittent operation with a predetermined duty cycle, and a timer 14c for counting a first predetermined time $T_1$ corresponding to a continuous generation period. The ON/OFF signal generation unit 14b produces a pulsed signal PNF having an ON-time $t_2$ and an OFF-time $t_1$. The ON-time $t_2$ is preferably more than one period of a scanning pattern, that is, a period of more than one rotation of a polygonal mirror 13c. The ON-time $t_2$ is set to be considerably shorter than the OFF-time $t_1$.

In the second embodiment, (1) the laser beam generation control unit 14 repeatedly turns the laser diode 13a on and off to produce an intermittent laser beam; (2) when reflected light from the bar code 12 is detected during intermittent generation, the laser diode is turned on to produce a continuous laser beam; and (3) when, during continuous generation, reflected light from the bar code is not detected for more than a predetermined time, the device 14 is switched to a state of intermittent generation.

The operation of the apparatus of the second embodiment is now described. For the sake of brevity, only those functions which differ from those of the first embodiment are discussed.

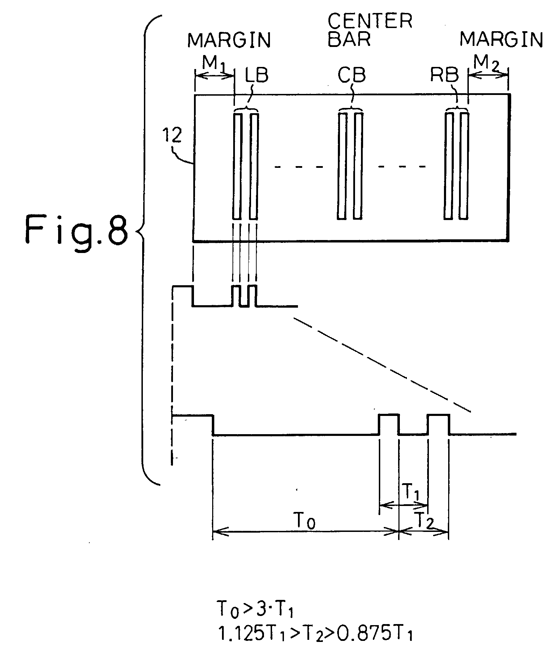

In the second embodiment, the signal processor unit 18 monitors whether or not a bar code is detected based on the binary-coded output. As shown in Fig. 8, a UPC type bar code has margins M1 and M2 at either end of the bar code. Four bars (black-white-black-white) LB and RB are provided adjacent to the margins and a centre bar CB is provided at the centre. Four to six characters of bar codes are inserted at a first half part and a second half part respectively. When the bars LB and RB of the bar code 12 are scanned by a laser, a binary-coded signal is produced as shown in the expanded, lower portion of Figure 8.

The bar code produces a binary-coded signal with the following relationships:

$$T_0 > 3 \cdot T_1$$

$$1.125 \cdot T_1 > T_2 > 0.875 \cdot T_1$$

The signal processor unit 18 monitors whether or not a binary-coded signal satisfying the above expressions is input and, when input, outputs a bar code-during-reading signal BRI to the laser beam control signal generation unit 14a. When the BRI signal is input, the laser beam control signal generation unit 14a is switched from intermittent generation to continuous generation.

When a concise reading of the bar code is completed, or a set-up time has elapsed, the BRI signal is removed. To this end, the laser beam control signal generation unit 14a inputs a time-counting-start instruction TST1 to the timer 14c in response to receipt of a BRI signal which initiates counting in the timer 14c.

Subsequently, whenever a time $T_1$ is counted by the timer 14c without a further BRI signal having been input, the timer 14c outputs a time-up signal TUP1 to the unit 14a. In response to the time-up signal TUP1, the laser beam control signal generation unit 14a outputs the PNF signal from the ON/OFF signal generation unit 14b as the RLT signal, thereby switching from a state of continuous generation to a state of intermittent generation. Thereafter, the same laser beam generation control is carried out. When a BRI signal is input anew during continuous generation, counting of the timer 14c is reset. When a read termination is instructed by a switch in the operation unit 19, a read termination signal RSP and a motor stopping signal MSP are output from the signal processor unit 18. As a result, the laser beam generation control unit 14 sets the RLT signal to a LOW level to stop laser beam generation and rotation of the motor.

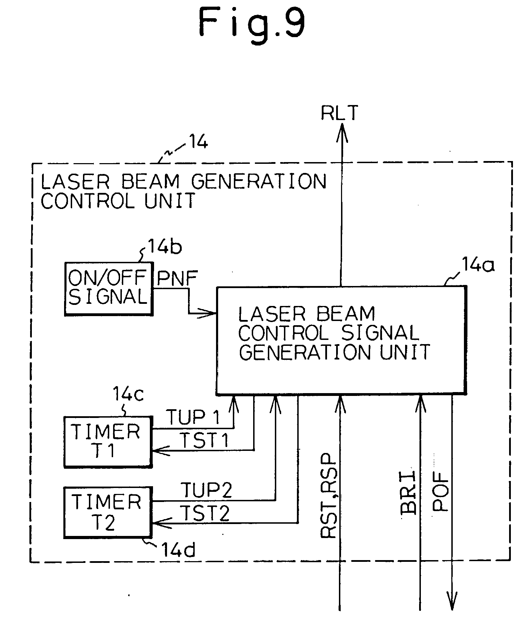

As shown in Figure 9, the laser beam generation control unit 14 of the third embodiment includes a laser beam control signal generation unit 14a for outputting a laser beam control signal RLT, an ON/OFF signal generation unit 14b outputting a pulsed signal PNF of predetermined duty cycle, a timer 14c counting a first predetermined time $T_1$ (continuous generation time period) and a timer 14d counting a second time $T_2$ (a laser generation stoppage time period). It is preferable that the ON-time $t_2$ of the pulsed PNF signal output from the ON/OFF signal generation unit 14b is longer than the time required by the laser beam to describe a complete scanning pattern, i.e. longer than the time taken to perform one full rotation of the polygonal mirror 13c'.

In the third embodiment, (1) the laser beam generation control unit 14 turns the laser diode 13a on and off to produce an intermittent laser beam; (2) when reflected light is detected from the bar code during intermittent generation, the unit 14 turns on the laser diode to carry out continuous laser beam generation; (3) when the unit 14 does not detect reflected light from the bar code for more than a time $T_1$ during continuous generation, the unit 14 is switched to a state of intermittent generation; and (4) when the unit 14 does not detect reflected light from the bar code for more than a time $T_2$ during intermittent generation, it stops laser beam generation.

The operation of the apparatus of the third embodiment is now described. For the sake of brevity, only those functions which differ from those of the first and second embodiments are discussed.

The signal processor unit 18 monitors whether or not the bar code is detected based on the binary-coded output and, when detected, the BRI signal is output.

When the BRI signal is received by the laser beam control signal generation unit 14a, it switches from intermittent generation to continuous generation.

Thereafter, when a bar code is scanned and its precise read operation of the bar code has been completed, or when a set-up time has elapsed, the BRI signal is removed. To this end, the laser beam control signal generation unit 14a inputs a time counting start instruction TST1 to the timer 14c to start the timer.

Subsequently, whenever a time $T_1$ is counted by the timer 14c without a further BRI signal having been input, the timer 14c outputs a time-up signal TUP1 to the unit 14a. In response to the time-up signal TUP1, the laser beam control signal generation unit 14a outputs as the RLT signal the PNF signal from the ON/OFF signal generation unit 14b and switches the laser from a state of continuous beam generation to a state of intermittent generation. The laser beam control signal generation unit 14a inputs a count starting instruction TST2 to the timer 14d to start it counting.

Subsequently, whenever the timer 14d counts up a time $T_2$ without a BRI signal having been input, the time-up signal TUP2 is output to the unit 14a. In response to the time-up signal TUP2, the laser beam control signal generation unit 14a sets the laser control signal RLT at a LOW level to stop the laser beam generation and at the same time a power source OFF instruction POF is output to the signal processor unit 18. The motor or the like then stops rotating and the voltage supply to the binary-coded circuit unit 17 or the like is stopped.

When a BRI is input anew during continuous generation of the laser beam, the timer 14c is reset. When a BRI signal is input anew during intermittent generation of the laser beam, the timer 14d is reset.

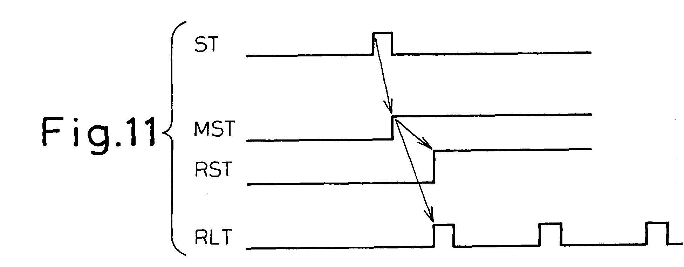

When the power source has been turned off, a read activation switch (not shown in the figure) in the operation unit 19 is actuatable to restart the device. On receipt of the resultant start signal ST, the signal processor unit 18 first generates a motor drive signal MST as shown in Fig. 11 to rotate the motor and, at the same time, the voltage supply circuit 21 is instructed to apply a voltage E to an amplifier 17a and to a binary-coded circuit 17b in the binary-coded circuit unit 17. The signal processor unit 18 waits for acknowledgement that rotation of the motor 13d has initiated before sending a read starting instruction RST to the laser beam generation control unit 14. The laser control signal RLT is output and the above-described operation is carried out thereafter.

Rotation of the motor is initiated before the start of laser beam generation as a safety standards measure to prevent convergence of the laser beam in an emergency.

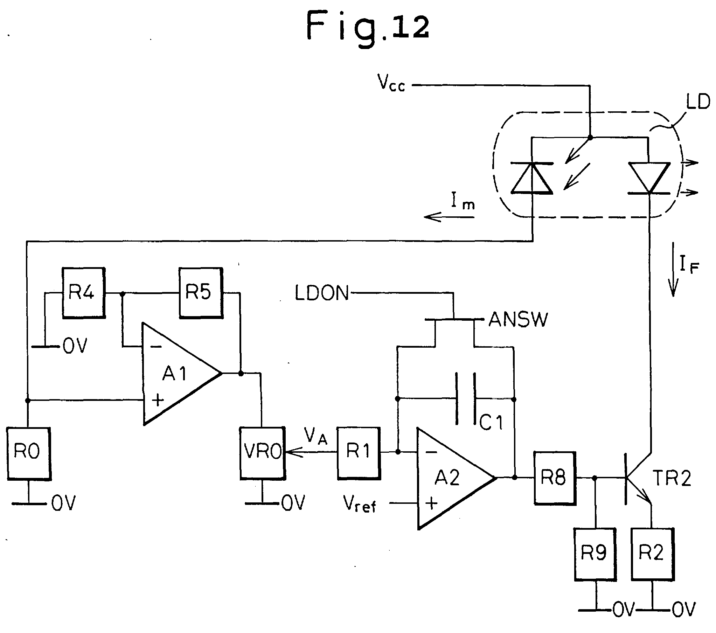

Fig. 12 is a block diagram showing an automatic power control circuit. In order to keep the light intensity emitted from the laser constant, the laser diode drive current $I_F$ is controlled by current Im that indicates the light intensity of the laser as detected by a photodiode. The current Im is converted into a voltage by a resistor $R_0$ and then the voltage is divided into a voltage $V_A$ in response to a predetermined light intensity by a variable resistor $VR_0$. The voltage $V_A$ is compared by an operational amplifier A2 with a reference voltage $V_{REF}$ and integrated to be converted into the laser diode drive current IF by a transistor TR2. The light intensity of the laser is set by the variable resistor $VR_0$. When the light intensity of the laser is the same as the predetermined value, the voltage $V_A$ and the reference voltage $V_{REF}$ hold the same potential. When an analog switch ANSW is turned on by an operating control signal LDON, the charge of a capacitor C1 is discharged and the output voltage of an operational amplifier A2 is the same as the reference voltage $V_{REF}$. When the output voltage is divided by resistors R8 and R9, the laser is turned off since the resistance values of resistors R8 and R9 are set such that the transistor TR2 is turned off.

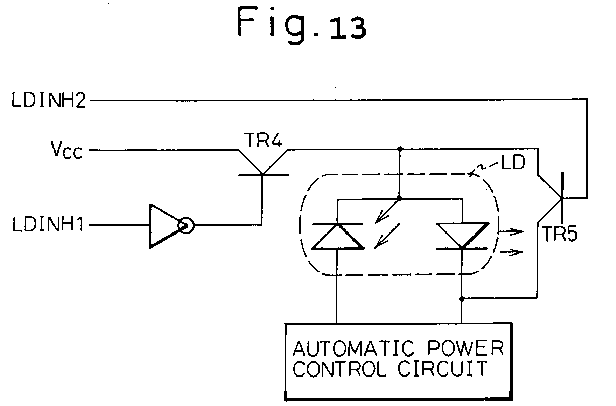

Fig. 13 is a schematic view showing a laser turn-ON inhibition circuit which functions such that, when a motor is being stopped or a fault is detected in the laser drive circuit, the laser is prohibited from being turned on.

When a transistor TR4 is turned off by a signal LDINH 1, the current supply to the laser diode LD is interrupted; whereas when a transistor TR5 is turned on by a signal LDINH 2, current does not flow to the laser diode to turn off the laser.

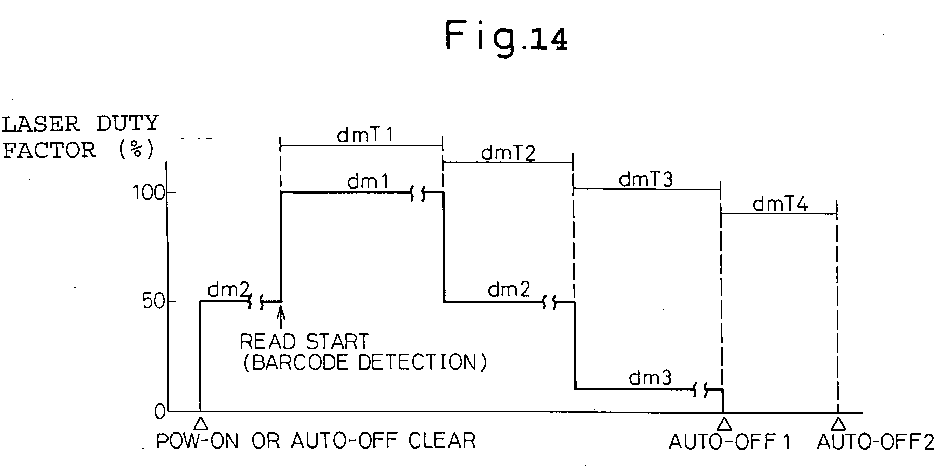

Fig. 14 is a timing chart illustrative of how the laser duty cycle can be controlled.

In general, when a helium-neon laser is used in the optical bar code scanner it is turned on continuously except in an AUTO-OFF time or a WAIT mode time. But when a laser diode is used, a control system is adopted which allows the laser diode to be operated intermittently in order to prolong the life of the laser diode.

In general, based on the predetermined duty factors shown in Fig. 14, the laser is repeatedly turned on and off and, once the presence of a bar code is detected, the laser is switched to a continuous on state, whereas when a bar code is not detected for a certain time, the laser duty factor is reduced gradually. In Fig. 14:

(1) <u>dm1 state</u>: dm1 is a continuous state (i.e. 100% duty factor).
(2) <u>dm2 state</u>: LD (laser diode) turned ON for 5 msec, turns OFF for 5 msec (i.e. 50% duty factor) and when a read operation is started, it transfers to the dml state.
(3) <u>dm3 state</u>: LD turned ON for 5 msec, turns OFF for 50 msec (i.e. approx. 9% duty factor) and when a read operation is started, it transfers to the dml state.
(4) <u>AUTO-OFF1</u>: LD turned OFF, motor rotates and, when a start switch is depressed, it transfers to the dm2 state.
(5) <u>AUTO-OFF2</u>: LD turned OFF, motor stopped and, when a start switch is depressed, the motor starts and, after an initial check, it transfers to the dm2 state.

For example:

| | |
|---|---|
| dmT1 = 5 secs. | Read operation starts as LD starts. |
| dmT2 = 115 secs. | dmT1 + dmT2 = 2 mins. |
| dmT3 = 13 mins. | dmT1 + dmT2 + dmT3 = 15 mins. |
| dmT4 = 15 mins. | dmT1 + dmT2 + dmT3 + dmT4 = 30 mins. |

**Claims**

1.  A controller (14, 18) for an optical mark reader of the type comprising a laser (13a) for producing a laser beam, means (13) for scanning the laser beam over a mark (12) and a photoconvertor (16) positioned to receive light emitted from the laser (13a) after its reflection from such a mark, the controller having an output for delivery of a laser control signal (RLT) for selectively turning such a laser on and off between lasing and non-lasing respectively and an input for receiving a signal (RST) providing a read command indicating that a mark is to be read, the controller being operable to output the laser control signal (RLT) in a plurality of different forms including a read mode to read a mark and a primary stand-by mode to turn such a laser on and off in an intermittent manner with a given duty cycle, wherein the controller is operable to switch the laser control signal (RLT) to the read mode whenever a read command is present at said input and from the read mode to the primary stand-by mode after no read command has been applied to said input for a preselected period of time, **characterised in that** the laser control signal (RLT) has a secondary stand-by mode to turn the laser on and off in an intermittent manner with a duty cycle having a smaller duty factor than that of the primary stand-by mode and in that the controller is operable to switch the laser control signal from the primary stand-by mode to the secondary stand-by mode after no read command has been applied to said input for a further preselected period of time.

2. A controller according to claim 1, the laser control signal also having a deactivated mode to hold such a laser (13a) in a non-lasing state, wherein the controller is operable to switch the laser control signal from the secondary stand-by mode to the deactivated mode after no read command has been applied to said input for a still further preselected period of time.

3. A controller according to any one of the preceding claims, wherein, in the read mode, the laser control signal (RLT) provides a continuous laser operation command.

4. A controller according to any one of the preceding claims, wherein the laser control signal also has at least a tertiary stand-by mode, and the primary, secondary, tertiary and any further stand-by modes are associated with duty cycles having progressively lower duty factors, wherein, in the absence of receipt of a read command at said input, the controller is operable to switch the laser control signal progressively through the primary, secondary, tertiary and any further stand-by modes, to progressively reduce the amount of time per duty cycle over which a laser will lase.

5. A controller according to any one of the preceding claims for an optical mark reader of the type in which the scanning means comprise a rotatable element (13c') and a motor (13d) for driving the rotatable element, the controller having an output for delivery of a motor control signal (MST, MSP) to such a motor, the motor control signal having a drive mode and a stop mode for respectively driving such a motor and retaining it halted.

6. A controller according to claim 5, when appended to claim 2, which is operable to coordinate the laser control signal and the motor control signal such that, after the laser control signal has been changed to the deactivated mode, the controller retains the motor control signal in the drive mode for a yet further preselected period of time, before switching it (MSP) to the stop mode.

7. A controller according to claim 5, when appended to claim 2, which is operable to coordinate the laser control signal and the motor control signal such that the controller switches the motor control signal to the stop mode (MSP) immediately after it switches the laser control signal (RLT) to the deactivated mode.

8. A controller according to claim 6 or 7, having a further input for receiving a start signal (ST) and a still further input for receiving a confirmation signal indicative of the fact that the rotatable element of an optical mark reader is rotating, wherein the controller is operable such that, in response to receipt of a start signal at said further input, it switches the motor control signal to the drive mode and then waits for receipt of a confirmation signal at said still further input before switching the laser control signal (RLT) to its read or stand-by modes, thereby preventing the possibility of generating a laser beam before scanning has initiated.

9. An optical mark reader comprising a laser (13a) for producing a laser beam, means (13) for scanning the laser beam over a mark (12), a photoconvertor (16) positioned to receive light emitted from the laser after its reflection from such a mark and a controller (14, 18) according to any one of the claims 1 to 4.

10. An optical mark reader comprising a laser (13a) for producing a laser beam, means (13) for scanning the laser beam over a mark (12) by means of a rotatable element (13c') drivable by a motor (13d), a photoconvertor (16) positioned to receive light emitted from the laser after its reflection from such a mark and a controller (14, 18) according to any one of the claims 6 to 8.

11. An optical mark reader according to claim 9 or 10, wherein the scanning means are operable to scan the laser beam over a specified scanning pattern and wherein the controller is operable such that, in the primary and secondary stand-by modes of the laser control signal, there is a time segment ($t_2$) in each duty cycle thereof for causing generation of a laser beam over a duration which is longer than the time required by the laser beam to describe its specified scanning pattern.

**Patentansprüche**

1. Steuereinheit (14, 18) für einen optischen Marken-Leser des Typs, der einen Laser (13a) zum Erzeugen eines Laserstrahls, eine Einrichtung (13) zum Abtasten des Laserstrahls über eine Marke (12) und einen Photowandler (16) enthält, der so angeordnet ist, daß er das von dem Laser (13a) emittierte Licht, nachdem es von einer solchen Marke reflektiert wurde, empfängt, wobei die Steuereinheit einen Ausgang besitzt, um ein Laser-Steuersignal (RLT) auszugeben, um selektiv einen solchen Laser ein-und auszuschalten und zwar jeweils zwischen einem Laserbetrieb und einem Nicht-Laserbetrieb, und einen Eingang aufweist, um ein Signal (RST) zu empfangen, welches einen Lesebefehl bildet, der anzeigt, daß eine Marke gelesen werden soll, wobei die Steuereinheit so betreibbar ist, um das Laser-Steuersignal (RLT) in einer Vielzahl von unterschiedlichen Formen inklusive einem Lese-Modus zum Lesen einer Marke und einem primären Standby-Modus auszugeben, um einen solchen Laser in einer intermittierenden Weise ein-und auszuschalten und zwar in einem gegebenen Tastverhältnis, wobei die Steuereinheit so betreibbar ist, um das Laser-Steuersignal (RLT) in den Lese-Modus immer dann zu schalten, wenn ein Lesebefehl an dem Eingang vorhanden ist, und aus dem Lese-Modus in den primären Standby-Modus zu schalten, nachdem kein Lesebefehl an den Eingang für eine vorgewählte Zeitdauer angelegt wurde, dadurch **gekennzeichnet**, daß das Laser-Steuersignal (RLT) einen sekundären Standby-Modus hat, um den Laser in einer intermittierenden Weise ein-und auszuschalten und zwar mit einem Tastverhältnis mit einem kleineren Verhältnisfaktor als demjenigen des primären Standby-Modus, und daß die Steuereinheit so betreibbar ist, um das Laser-Steuersignal von dem primären Standby-Modus in den sekundären Standby-Modus zu schalten, nachdem ein Lesebefehl an den Eingang für eine weitere vorgewählte Zeitdauer angelegt wurde.

2. Steuereinheit nach Anspruch 1, bei der das Laser-Steuersignal auch einen deaktivierten Modus aufweist, um einen solchen Laser (13a) in einem nicht lasernden Zustand zu halten, wobei die Steuereinheit so betreibbar ist, um das Laser-Steuersignal aus dem sekundären Standby-Modus in den deaktivierten Modus zu schalten, nachdem kein Lesebefehl an den Eingang für eine noch weitere vorgewählte Zeitdauer angelegt wurde.

3. Steuereinheit nach irgendeinem der vorhergehenden Ansprüche, bei der in dem Lesemodus das Laser-Steuersignal (RLT) einen Dauerlaserbetrieb-Befehl liefert.

4. Steuereinheit nach irgendeinem der vorhergehenden Ansprüche, bei der das Laser-Steuersignal auch wenigstens einen tertiären Standby-Modus aufweist und der primäre, sekundäre, tertiäre und irgendein weiterer Standby-Modus Tastverhältnissen zugeordnet sind, die progressiv niedrigere Verhältnisfaktoren besitzen, wobei bei Abwesenheit des Empfangs eines Lesebefehls an dem Eingang, die Steuereinheit so betreibbar ist, um das Laser-Steuersignal progressiv durch den primären, sekundären, tertiären und irgendeinen weiteren Standby-Modus zu schalten, um progressiv die Größe von Zeit pro Tastverhältnis zu reduzieren, über die hinweg ein Laser lasert.

5. Steuereinheit nach irgendeinem der vorhergehenden Ansprüche für einen optischen Marken-Leser des Typs, bei dem eine Abtasteinrichtung ein drehbares Element (13c') und einen Motor (13d) zum Antreiben des drehbaren Elements aufweist, wobei die Steuereinheit einen Ausgang besitzt, um ein Motor-Steuersignal (MST, MSP) an einen solchen Motor auszugeben, wobei das Motor-Steuersignal einen Antriebs-Modus und einen Anhalte-Modus besitzt, um einen solchen Motor jeweils anzutreiben und ihn angehalten zu halten.

6. Steuereinheit nach Anspruch 5, in Rückbezug auf Anspruch 2, die betreibbar ist, um das Laser-Steuersignal und das Motor-Steuersignal derart zu koordinieren, daß, nachdem das Laser-Steuersignal in den deaktivierten Modus geändert worden ist, die Steuereinheit das Motor-Steuersignal in dem Antriebs-Modus für eine noch weitere vorgewählte Zeitdauer hält, bevor sie dieses (MSP) in den Anhalte-Modus schaltet.

7. Steuereinheit nach Anspruch 5, in Rückbezug auf Anspruch 2, die betreibbar ist, um das Laser-Steuersignal und das Motor-Steuersignal derart zu koordinieren, daß die Steuereinheit das Motor-Steuersignal in den Anhalte-Modus (MSP) schaltet unmittelbar nachdem sie das Laser-Steuersignal (RLT) in den deaktivierten Modus geschaltet hat.

8. Steuereinheit nach Anspruch 6 oder 7, mit einem weiteren Eingang zum Empfangen eines Startsignals (ST) und einem noch weiteren Eingang zum Empfangen eines Bestätigungssignals, welches die Tatsache anzeigt, daß das drehbare Element eines optischen Marken-Lesers in Drehung versetzt ist, wobei die Steuereinheit derart betreibbar ist, daß in Abhängigkeit vom Empfang eines Startsignals an dem weiteren Eingang, diese das Motor-Steuersignal in den Antriebs-Modus schaltet und dann auf den Empfang eines Bestätigungssignals an dem noch weiteren Eingang wartet bevor sie das Laser-Steuersignal (RLT) in dessen Lese-oder Standby-Modus schaltet, wodurch die Möglichkeit der Erzeugung eines Laserstrahls vor dem Initiieren des Abtastvorganges verhinderbar ist.

9. Optischer Marken-Leser, mit einem Laser (13a) zum Erzeugen eines Laserstrahls, einer Einrichtung (13) zum Abtasten des Laserstrahls über einer Marke (12), einem Photoumsetzer (16), der so angeordnet ist, daß er das von dem Laser emittierte Licht nach dessen Reflexion von einer Marke empfängt, und einer Steuereinheit (14, 18) nach irgendeinem der Ansprüche 1 bis 4.

10. Optischer Marken-Leser, mit einem Laser (13a) zum Erzeugen eines Laserstrahls, einer Einrichtung (13) zum Abtasten des Laserstrahls über einer Marke (12) mit Hilfe eines drehbaren Elements (13c'), welches durch einen Motor (13d) antreibbar ist, einem Photoumsetzer (16), der so angeordnet ist, daß er das von dem Laser emittierte Licht nach dessen Reflexion von einer Marke empfangen kann, und mit einer Steuereinheit (14, 18) nach irgendeinem der Ansprüche 6 bis 8.

11. Optischer Marken-Leser nach Anspruch 9 oder 10, bei dem die Abtasteinrichtung dafür betreibbar ist, um den Laserstrahl über ein spezifiziertes Abtastmuster abtastmäßig zu bewegen und bei dem die Steuereinheit so betreibbar ist, daß in dem primären und sekundären Standby-Modus des Laser-Steuersignals, ein Zeitsegment ($t_2$) in jedem Tastverhältnis desselben vorhanden ist, um das Erzeugen eines Laserstrahls über eine Dauer hinweg zu bewirken, die länger ist als die Zeit, die von dem Laserstrahl benötigt wird, um sein spezifiziertes Abtastmuster zu beschreiben.

## Revendications

1. Régisseur (14, 18) pour un lecteur de marques optiques du type comprenant un laser (13a) pour produire un faisceau laser, des moyens (13) pour faire balayer le faisceau laser sur une marque (12) et un photoconvertisseur (16) disposé pour recevoir la lumière émise par le laser après sa réflexion sur une telle marque, le régisseur ayant une sortie pour délivrer un signal de commande de laser (RLT) pour mettre sélectivement sous tension et hors tension un tel laser dans des périodes d'émission et de non-émission, respectivement, et une entrée pour recevoir un signal (RST) fournissant une commande de lecture indiquant qu'une marque doit être lue, et le régisseur étant actionnable pour fournir le signal de commande de laser (RLT) sous une pluralité de formes différentes comprenant un mode de lecture pour lire une marque et un mode d'attente primaire pour mettre le laser sous tension et hors tension d'une manière intermittente avec un rapport cyclique donné, dans lequel le régisseur est actionnable pour commuter le signal de commande de laser (RLT) au mode de lecture chaque fois qu'une commande de lecture est présente à ladite entrée, et du mode de lecture au mode d'attente primaire après qu'aucune commande de lecture n'a été appliquée à ladite entrée pendant une période de temps présélectionnée,
   caractérisé en ce que le signal de commande de laser (RLT) a un mode d'attente secondaire pour mettre le laser sous tension et hors tension d'une manière intermittente avec un rapport cyclique plus petit que celui du mode d'attente primaire, et en ce que le régisseur est actionnable pour commuter le signal de commande de laser du mode d'attente primaire au mode d'attente secondaire après qu'aucune commande de lecture n'a été appliquée à ladite entrée pendant une autre période de temps présélectionnée.

2. Régisseur selon la revendication 1, le signal de commande de laser ayant en outre un mode désactivé pour maintenir le laser (13a) dans un état de non-émission, dans lequel le régisseur est actionable pour commuter le signal de commande de laser du mode d'attente secondaire au mode désactivé après qu'aucune commande de lecture n'a été appliquée à ladite entrée pendant une autre période de temps présélectionnée.

3. Régisseur selon l'une quelconque des revendications précédentes, dans lequel, dans le mode de lecture, le signal de commande de laser (RLT) fournit une commande de fonctionnement continu du laser.

4. Régisseur selon l'une quelconque des revendications précédentes, dans lequel le signal de commande de laser a en outre au moins un mode d'attente tertiaire, et les modes d'attente primaire, secondaire, tertiaire et tout autre mode d'attente sont associés à des cycles de fonctionnement à rapports cycliques progressivement décroissants, dans lequel, en l'absence de réception d'une commande de lecture à ladite entrée, le régisseur est actionnable pour commuter le signal de commande de laser progressivement par les modes d'attente primaire, secondaire, tertiaire et tout autre mode d'attente pour réduire progressivement la période de temps par cycle de fonctionnement pendant laquelle le laser émet le faisceau laser.

5. Régisseur selon l'une quelconque des revendictions précédentes pour un lecteur de marques optiques du type dans lequel les moyens de rotation comprennent un élément tournant (13c') et un moteur (13d) pour entraîner en rotation l'élément tournant, le régisseur ayant une sortie pour délivrer un signal de commande de moteur (MST, MSP) au moteur, le signal de commande de moteur ayant un mode d'excitation et un mode d'arrêt pour exciter le moteur et le maintenir arrêté, respectivement.

6. Régisseur selon la revendication 5 rattachée à la revendication 2, qui est actionnable pour coordonner le signal de commande de laser et le signal de commande de moteur de telle manière qu'après que le signal de commande de laser a été changé au mode désactivé, le régisseur maintient le signal de commande de moteur dans le mode d'excitation pendant une autre période de temps présélectionnée avant de le commuter au mode d'arrêt (MSP).

7. Régisseur selon la revendication 5 rattachée à la revendication 2, qui est actionnable pour coordonner le signal de commande de laser et le signal de commande de moteur de telle manière que le régisseur commute le signal de commande de moteur au mode d'arrêt (MSP) immédiatement après qu'il a commuté le signal de commande de laser (RLT) au mode désactivé.

8. Régisseur selon la revendication 6 ou 7, ayant une autre entrée pour recevoir un signal de démarrage (ST) et encore une autre entrée pour recevoir un signal de confirmation indicatif du fait que l'élément tournant du lecteur de marques optiques est en train de tourner, dans lequel le régisseur est actionnable de telle manière qu'en réponse à un signal de démarrage appliqué à ladite autre entrée, il commute le signal de commande de moteur au mode d'alimentation et attend ensuite la réception d'un signal de confirmation à ladite encore une autre entrée avant de commuter le signal de commande de laser (RLT) à son mode de lecture ou d'attente, ce qui évite le risque de produire un laisceau laser avant que le balayage ait commencé.

9. Lecteur de marques optiques, comprenant un laser (13a) pour produire un faisceau laser, des moyens (13) pour faire balayer le faisceau laser sur une marque (12), un photoconvertisseur (16) disposé pour recevoir la lumière émise par le laser après sa réflexion sur la marque, et un régisseur (14, 18) selon l'une quelconque des revendications 1 à 4.

10. Lecteur de marques optiques comprenant un laser (13a) pour produire un faisceau laser, des moyens (13) pour faire balayer le faisceau laser sur une marque (12) au moyen d'un élément tournant (13c') entraînable en rotation par un moteur (13d), un photoconvertisseur (16) disposé pour recevoir la lumière émise par le laser après sa réflexion sur la marque, et un régisseur (14, 18) selon l'une quelconque des revendications 6 à 8.

11. Lecteur de marques optiques selon la revendication 9 ou 10, dans lequel les moyens de balayage sont actionnables pour faire balayer le faisceau laser suivant une trame de balayage spécifiée, et dans lequel le régisseur est actionnable de telle manière que dans les modes d'attente primaire et secondiare du signal de commande de laser, il y a un segment de temps ($t_2$) dans chaque cycle de fonctionnement de celui-ci pour provoquer la génération d'un faisceau laser pendant une durée qui est plus longue que le temps nécessaire au faisceau laser pour décrire sa trame de balayage spécifiée.

# Fig.1

# Fig.2

ARTICLE

BAR CODE
12
11

LASER BEAM
SCANNER
13

13c
SCANNING
OPT-
SYSTEM

MOTOR
13d

13a
LD

13b
LD DRIVE

MOTOR
DRIVE
13e

RLT

CONVER
-GENCE
15

PHOTO-
DETECT
16

17

AMP.
17a

BINARY
-CODED
17b

LASER BEAM
GENERATION
CONTROL
14

RST,RSP

MST,MSP

18

VOLTAGE
SUPPLY
21

SIGNAL PROCESSOR

12
BAR-
CODE

POWER
SUPPLY
20

OPERATING
UNIT
19

Fig.3(A)

13c″

13a

LASER
DIODE

RB

13c′

13d

Fig.3(B)

RB

12

# Fig.4

RLT

LASER BEAM
GENERATION UNIT

14

14a

14b

| ON/OFF GENERA-TOR | PNF | LASER BEAM CONTROL SIGNAL GENERATION |

RST,RSP

Fig.5(a) PNF

$t_2$  $t_1$

Fig.5(b)

90% 80% 70%

# Fig.6

RLT

14

LASER BEAM GENERATION
CONTROL UNIT

14b

ON/OFF
SIGNAL

PNF

14a

LASER BEAM
CONTROL SIGNAL
GENERATION UNIT

14c

TUP1

TIMER
T1

TST1

RST,RSP

BRI

Fig.7

Fig.8

$$T_0 > 3 \cdot T_1$$
$$1.125 T_1 > T_2 > 0.875 T_1$$

EP 0 487 318 B1

# Fig.9

RLT

14

LASER BEAM GENERATION
CONTROL UNIT

14b

ON/OFF
SIGNAL | PNF

14a

LASER BEAM
CONTROL SIGNAL
GENERATION UNIT

14c

TIMER
T1

TUP 1
TST1

TIMER
T2

TUP2
TST2

14d

RST,RSP

BRI

POF

Fig.10

EP 0 487 318 B1

Fig.11

Fig.12

# Fig.13

LDINH2

Vcc

TR4

LD

LDINH1

TR5

AUTOMATIC POWER
CONTROL CIRCUIT

# Fig.14

LASER DUTY
FACTOR (%)

EP 0 487 318 B1